# EUROPÄISCHE PATENTSCHRIFT

(11) **EP 2 547 551 B1**
(45) Veröffentlichungstag und Bekanntmachung des Hinweises auf die Patenterteilung: **07.09.2016**
(21) Anmeldenummer: 11708707.2
(22) Anmeldetag: 28.02.2011
(51) Int. Cl.: B60Q 1/00, B60K 35/00, B60K 37/06, B60Q 3/02, B60Q 3/04

(54) **VERFAHREN UND VORRICHTUNG ZUR PARAMETEREINSTELLUNG MEHRERER LICHTQUELLEN UND AUDIOQUELLEN**
METHOD AND DEVICE FOR SETTING PARAMETERS OF A PLURALITY OF LIGHT SOURCES AND AUDIO SOURCES
PROCÉDÉ ET DISPOSITIF POUR PARAMÉTRER PLUSIEURS SOURCES LUMINEUSES ET SOURCES AUDIO

(30) Priorität: 13.03.2010 DE 102010011306
(43) Veröffentlichungstag der Anmeldung: 23.01.2013
(73) Patentinhaber: Volkswagen Aktiengesellschaft, 38440 Wolfsburg (DE); AUDI AKTIENGESELLSCHAFT, 85045 Ingolstadt (DE)
(72) Erfinder: AHLERS, Julia, 12527 Berlin (DE); GAUS, Imke, 10589 Berlin (DE); WALD, Stefanie, 10781 Berlin (DE); HENGSTENBERG, Oliver, 12167 Berlin (DE); LOU, Jian, 10555 Berlin (DE); BAUMGARTEN, Thorb, 10115 Berlin (DE); ALTHOFF, Frank, 31275 Lehrte (DE); HAMBERGER, Werner, 85101 Lenting (DE)
(86) Internationale Anmeldenummer: PCT/EP2011/000962
(87) Internationale Veröffentlichungsnummer: WO 2011/113528

(56) Entgegenhaltungen:
- WO-A1-2009/012034
- US-A1- 2005 261 815
- US-A1- 2008 024 285

## Beschreibung

Die Erfindung betrifft ein Verfahren und eine Vorrichtung zur Einstellung von mindestens einem Parameter mindestens einer Lichtquelle, wobei die Lichtquelle in einem Fahrzeug angeordnet ist.

In modernen Fahrzeugen, insbesondere in Kraftfahrzeugen, existiert eine Vielzahl von verschiedenen Lichtquellen, z.B. Lichtquellen im Fahrzeughimmel und Lichtquellen zur Armaturenbeleuchtung. Diese Lichtquellen können einem Funktionsbereich Lichtquellen des Fahrzeugs zugeordnet werden. Eine Funktionsweise der Lichtquellen kann mittels einer Einstellung von einem oder mehreren Parametern der jeweiligen Lichtquelle, z.B. einer Lichtstärke, geändert werden. Durch eine Anpassung der Lichtstärke einer Lichtquelle an z.B. einen Fahrzeugführer kann eine Sicherheit während eines Betriebs des Fahrzeugs erhöht werden.

Weiter existiert in modernen Kraftfahrzeugen eine Vielzahl von Audioquellen, z.B. Audioquellen eines Fahrerassistenzsystems, Audioquellen eines Fahrerinformationssystems und Audioquellen eines Infotainmentsystems. Diese Audioquellen lassen sich einem Funktionsbereich Audioquellen des Fahrzeugs zuordnen. Eine Funktionsweise der Audioquellen kann mittels einer Einstellung von einem oder mehreren Parametern der jeweiligen Audioquelle, z.B. einer Lautstärke, geändert werden. Durch eine Anpassung der Lautstärke einer Audioquelle an z.B. einen Fahrzeugführer kann eine Sicherheit während eines Betriebs des Fahrzeugs erhöht werden.

Eine Anpassung von Parametern der Lichtquellen und Audioquellen ist insbesondere dann notwendig, wenn schlafende Kinder im Auto transportiert werden. Unausgeschlafene Kinder benötigen eine erhöhte Aufmerksamkeit auch des Fahrzeugführers. Unausgeschlafene Kinder im Fahrzeug können daher den Fahrzeugführers von seiner Fahraufgabe ablenken. Es daher wünschenswert, schlafende Kinder nicht durch zu starke Beleuchtung oder zu laute Beschallung zu wecken. Eine individuelle Einstellung aller Parameter aller Lichtquellen und aller Audioquellen z.B. vor einem Losfahren oder während der Fahrt des Fahrzeugs durch den Fahrzeugführer ist in der Regel sehr zeitaufwändig.

Im Bereich der Fahrzeugbedienung existieren Ansätze, Parameter mehrerer Fahrzeugfunktionen, die auch verschiedenen Funktionsbereichen zugeordnet sein können, gleichzeitig einzustellen. Ein solcher Ansatz ist eine so genannte nutzerspezifische Einstellung. Eine nutzerspezifische Einstellung bedeutet hierbei, dass mehrere Parameter abhängig von einem Nutzer, beispielsweise von einem Fahrzeugführer, eingestellt werden.

Beispielsweise offenbart die WO 2008/050136 ein Fahrzeugsystem zur Nutzung in einem Fahrzeug, wobei das Fahrzeugsystem Informationen zur Fahrzeugnutzung speichern kann. Weiter kann das Fahrzeugsystem Fahrzeugoptionen für einen Fahrzeugführer speichern. Weiter offenbart die Druckschrift, dass ein Fahrzeugführer identifiziert werden kann, fahrzeugführerspezifische Daten geladen und angezeigt werden können. Hierbei werden also Parameter nutzerspezifisch oder personalisiert geladen und dargestellt.

Auch existieren Ansätze für eine gruppenspezifische Einstellung von Parametern. Eine gruppenspezifische Einstellung von Parametern bedeutet hierbei, dass Parameter in Abhängigkeit einer Gruppe von Nutzern, z.B. Fahrzeugführern, eingestellt werden können. Hierbei werden Parameter also nicht personalisiert oder nutzerspezifisch eingestellt, sondern sind an z.B. Bedürfnisse einer Nutzergruppe, also mehrere Nutzer, angepasst.

Die vorhergehend erwähnte WO 2008/050136 offenbart hierzu, dass ein Fahrzeugführer eine vorbestimmte Gruppe von Parametern auswählen kann. Z.B. kann der Fahrzeugführer eine Gruppe von Parametern auswählen, die an Fahrzeugführer mit schlechten Höreigenschaften oder Farbenblindheit angepasst sind. Dann kann eine Darstellungseinheit dem Fahrzeugführer Informationen entsprechend den eingestellten Parametern anzeigen.

Die US 2008/0211779 A1 offenbart ein Verfahren zur Steuerung eines Systems. Das Verfahren umfasst die Bereitstellung einer Anzeigeeinheit, welche mittels eines Computers gesteuert wird. Die Anzeigeeinheit ermöglicht hierbei eine Eingabe von Daten. Hierbei ist die Anzeigeeinheit rekonfigurierbar. Weiter offenbart die Druckschrift, dass eine Konfiguration der Anzeigeeinheit z.B. abhängig von Nutzergruppen wie z.B. Rentnern, Studenten, Familien oder älteren Personen gemacht werden kann.

In beiden vorhergehend erläuterten Druckschriften ist eine gruppenspezifische Einstellung von Parametern jedoch nur für einen Funktionsbereich des Fahrzeugs, insbesondere für eine Anzeigeeinheit, offenbart.

Aus der US 2005/0261815 A1 ist ein Verfahren zur Einstellung von mindestens einem Parameter mindestens einer Lichtquelle bekannt, wobei die Lichtquelle in einem Fahrzeug angeordnet ist, wobei mittels einer Aktivierung eines ersten Profils der mindestens eine Parameter der mindestens einen Lichtquelle und mindestens ein Parameter mindestens einer Audioquelle eingestellt werden, wobei die mindestens eine Audioquelle in dem Fahrzeug angeordnet ist. Das Profil ist dabei typischerweise ein nutzerindividuelles Profil. Dabei kann der Nutzer bestimmten Einstellungen Audiodaten zuordnen, die dann zusammen abgerufen werden. Dabei offenbart die Druckschrift, dass vorab definierte Themen existieren können, aus denen der Nutzer auswählen kann, wobei die Themen eine Zuordnung von Audio-Daten und Einstellungen aufweise.

Aus der US 2008/0024285 A1 ist ein Verfahren bekannt, wo nutzerindividuell einem bestimmten Ereignis ein Audio-Signal zugeordnet werden kann.

Ein ähnliches Verfahren ist aus der WO 2009/012034 A1 bekannt, bei der einem Fahrzeugzustand ein Audio-Signal und/oder Lichtsignal zugeordnet ist, die bei Erreichen des Fahrzeugzustandes ausgesendet werden. Weiter kann der Nutzer ein besonderes Licht- und/oder Audio-Thema auswählen, das ohne einen besonderen Fahrzeugzustand in den Innenraum abgestrahlt wird.

Es stellt sich das technische Problem, eine verbesserte, insbesondere schnellere und komfortablere Einstellung von Parametern von Lichtquellen und Audioquellen eines Fahrzeuges zu schaffen.

Die Lösung des technischen Problems ergibt sich aus dem Gegenstand mit den Merkmalen der Ansprüche 1 und 5.

Vorgeschlagen wird ein Verfahren zur Einstellung von mindestens einem Parameter mindestens einer Lichtquelle, wobei die Lichtquelle in einem Fahrzeug angeordnet ist. Lichtquellen umfassen hierbei z.B. Lichtquellen im Fahrzeughimmel, Lichtquellen zur Armaturenbeleuchtung, Lichtquellen zur Fußraumbeleuchtung, Lichtquellen zur Kofferraumbeleuchtung und weitere Lichtquellen im Fahrzeug. Alle Lichtquellen sind hierbei einem Funktionsbereich Lichtquellen des Fahrzeugs zugeordnet. Die Steuerung einer Lichtquelle kann hierbei als eine Fahrzeugfunktion bezeichnet werden, die dem Funktionsbereich Lichtquellen zugeordnet ist. Parameter der Lichtquellen können z.B. eine Lichtstärke sein, insbesondere bei dimmbaren Lichtquellen. Auch kann ein Parameter einer Lichtquelle eine Zeitdauer sein, bis die Lichtquelle eine gewünschte Lichtstärke erreicht (Dimmgeschwindigkeit). Auch kann ein Parameter einer Lichtquelle eine Blinkfrequenz der Lichtquelle (An-Aus-Frequenz) sein. Auch kann ein Parameter einer Lichtquelle eine Farbe der Lichtquelle sein. Parameter können z.B. in einem kontinuierlichen oder diskreten Wertebereich eingestellt werden. Der Begriff Parameter umfasst aber auch Zustände einer der Lichtquelle, die eine bestimmte Funktionsweise dieser Funktion charakterisieren. Beispielsweise kann der Begriff Parameter auch Zustände wie z.B. "Ein" oder "Aus" bezeichnen.

Mittels einer Aktivierung eines ersten Funktionsprofils, des so genannten Baby-Sleep-Profils, wird der mindestens eine Parameter der mindestens einen Lichtquelle eingestellt. Zur Aktivierung wird ein Bedienelement im Fahrzeug benutzt.

Erfindungsgemäß wird bei der Aktivierung des Baby-Sleep-Profils zusätzlich mindestens ein Parameter mindestens einer Audioquelle eingestellt, wobei die mindestens eine Audioquelle nicht dem Funktionsbereich Lichtquellen, sondern einem Funktionsbereich Audioquellen des Fahrzeugs zugeordnet ist. Die mindestens eine Audioquelle ist hierbei im Fahrzeug angeordnet.

Audioquellen umfassen hierbei z.B. Audioquellen eines Fahrerassistenzsystems, Audioquellen eines Fahrerinformationssystems und Audioquellen eines Infotainmentsystems und weitere Audioquellen im Fahrzeug. Alle Audioquellen sind hierbei einem Funktionsbereich Audioquellen des Fahrzeugs zugeordnet. Die Steuerung einer Audioquelle kann hierbei ebenfalls als eine Fahrzeugfunktion bezeichnet werden, wobei diese Fahrzeugfunktion dem Funktionsbereich Audioquellen zugeordnet ist. Parameter der Audioquellen können z.B. eine Lautstärke sein. Auch kann ein Parameter einer Audioquelle eine Zeitdauer sein, bis die Audioquelle eine gewünschte Lautstärke erreicht. Auch kann ein Parameter einer Audioquelle ein Fading-Verhältnis z.B. zwischen Lautstärke im vorderen Fahrzeugbereich und Lautstärke im hinteren Fahrzeugbereich sein. Auch kann ein Parameter einer Audioquelle der Anteil von Höhen und Tiefen im Audiosignal sein.

Mittels einer Aktivierung können hierbei nur Parameter von parametrisierbaren Licht- und/oder Audioquellen eingestellt werden. Hierdurch kann z.B. sichergestellt sein, dass Licht- und/oder Audioquellen existieren können, deren Parameter nicht durch eine Aktivierung des Baby-Sleep-Profils geändert werden sollen. Diese parametrisierbaren Lichtquellen und die parametrisierbaren Audioquellen, deren Parameter mittels der Aktivierung des Baby-Sleep-Profils eingestellt werden, sind hierbei den Funktionsbereichen Lichtquellen und Audioquellen im Fahrzeug zuordenbar. Es können jedoch auch parametrisierbare Licht- und/oder Audioquellen existieren, die nicht dem Funktionsbereich Lichtquellen oder Audioquellen zugeordnet sind. Parameter dieser parametrisierbaren Licht- und/oder Audioquellen können dann nicht mittels einer Aktivierung eines gruppenspezifischen Funktionsprofils eingestellt werden.

Parametrisierbare Licht- und/oder Audioquellen können hierbei jeweils einen oder mehrere Parameter umfassen, die bei einer Aktivierung eingestellt werden. Auch können die parametrisierbaren Licht- und/oder Audioquellen veränderbare Parameter und unveränderbare Parameter umfassen, wobei nur die veränderbaren Parameter bei einer Aktivierung eingestellt werden können.

Selbstverständlich können mittels der Aktivierung des Baby-Sleep-Profils Parameter von weiteren parametrisierbaren Fahrzeugfunktionen noch weiterer Funktionsbereiche eingestellt werden. Funktionsbereiche umfassen hierbei z.B. Zugangskontrolle und Fahrberechtigung, Fenster- und Dachsteuerung, Spiegel-, Sitz- und Lenkungsverstellung, Klimatisierungs- und Heizungssysteme, Fahrerinformation und Bedienung, Infotainment und Kommunikation, Fahrerassistenzsysteme, Insassen- und Passantenschutz, Fahrwerk, Car2X-Funktionen, Antriebsstrang, Sonderfahrzeugsysteme, Vernetzungs-/Diagnosefunktionen, Wisch- und Waschsysteme und Signal- und Leistungsverteilung. Auf die Einstellung von Parametern weiterer parametrisierbarer Fahrzeugfunktionen weiterer Funktionsbereiche können die Ausführungen zur Einstellung von Parametern von parametrisierbaren Licht- und/oder Audioquellen übertragen werden.

Unter dem Baby-Sleep-Profil wird hierbei ein gespeicherter Satz von Parametern verstanden, der dazu dient, mindestens eine Licht- und mindestens eine Audioquelle in einem Bedienschritt derart einzustellen, dass das Fahrzeug insbesondere für den Fall eines Transports von schlafenden Kindern angepasst bzw. optimiert wird.

Neben dem ersten Funktionsprofil "Baby-Sleep-Profil" können noch weitere aktivierbare Funktionsprofile existieren. Allgemein dienen diese Funktionsprofile dazu, Fahrzeugfunktionen aus unterschiedlichen den Funktionsbereichen des Fahrzeugs, insbesondere aus dem Funktionsbereich Lichtquellen und dem Funktionsbereich Audioquellen einfach und intuitiv einzustellen, um das Fahrzeug an eine gewünschte Fahrsituation, an ein Umfeld oder einen Fahrerwunsch anzupassen. Hierzu können Anforderungen der gewünschten Fahrsituation, des Umfelds oder des Fahrerwunsches vorab analysiert und aus dieser Analyse Parameter bestimmt werden.

Insbesondere können auch so genannten gruppenspezifische Funktionsprofile wie beispielsweise die Profile Geschäftsreise, Familie, Barrierefreiheit und Student existieren. Allgemein dienen diese gruppenspezifischen Funktionsprofile dazu, Fahrzeugfunktionen aus unterschiedlichen Funktionsbereichen des Fahrzeugs, insbesondere aus dem Funktionsbereich Lichtquellen und dem Funktionsbereich Audioquellen einfach und intuitiv einzustellen, um das Fahrzeug nicht an einen individuellen Nutzer sondern einen Nutzer einer bestimmten Nutzergruppe anzupassen. Hierzu können Eigenschaften oder Anforderungen der einzelnen Nutzergruppe analysiert und aus diesen einzustellende Parameter abgeleitet werden. Hierdurch wird das Fahrzeug einfach für Nutzer unterschiedlicher Nutzergruppen nutzbar.

Eine Aktivierung des Baby-Sleep-Profils kann hierbei während der Fahrt des Fahrzeugs als auch bei Stand des Fahrzeugs erfolgen. Vorstellbar ist auch, eine Aktivierung nur unter gewissen Bedingungen zuzulassen. Solche Bedingungen können beispielsweise eine aktivierte Parkbremse oder eine zulässige Geschwindigkeit, die beispielsweise unter einer vorbestimmten maximalen Geschwindigkeit liegt, sein.

Die Einstellung der Parameter kann hierbei auf unterschiedliche Weise erfolgen. Beispielsweise kann ein existierendes Bussystem, beispielsweise ein CAN-Bus, des Fahrzeugs genutzt werden. Vorstellbar ist auch, dass Steuergeräte, die die Lichtquellen oder Audioquellen steuern, direkt angesteuert werden.

Bei einer Aktivierung kann z.B. ein Satz von profilspezifischen Parametern z.B. aus einer im Fahrzeug vorhandenen Speichereinheit ausgelesen und diese Parameter an die Steuergeräte des Fahrzeugs datentechnisch übertragen werden, wobei die Steuergeräte z.B. die Lichtstärke einer Lichtquelle oder die Lautstärke einer Audioquelle regeln. Die Parameter werden dann von den Steuergeräten datentechnisch empfangen und gespeichert. Hierbei können beispielsweise vorhergehend gespeicherte Parameter überschrieben werden.

Die Aktivierung des Baby-Sleep-Profils beendet automatisch eine Aktivität eines weiteren, bereits aktivierten Funktionsprofils.

Weiter kann der Fahrzeugführer und/oder weitere Fahrzeuginsassen über ein aktiviertes Baby-Sleep-Profil informiert werden. Hierzu kann beispielsweise eine im Fahrzeug angeordnete Anzeigeeinheit genutzt werden. Auch können Ambientefunktionen, z.B. Beleuchtungs- und Darstellungseigenschaften der Anzeigeeinheit, zur Information über das aktuell aktivierte Funktionsprofil genutzt werden. Weiter können zur Rückmeldung über eine Aktivierung des Baby-Sleep-Profils bestimmte Fahrzeugfunktionen, insbesondere Fahrzeugfunktionen im Funktionsbereich der Beleuchtung und/oder im Funktionsbereich des Infotainments, direkt nach einer Aktivierung eines Funktionsprofils übertrieben dargestellt werden.

Das Verfahren kann hierbei eine Umschaltung auf das Baby-Sleep-Profils Funktionsprofil in angemessener Zeit durchführen. Eine Umschaltung bedeutet hierbei eine Aktivierung des Baby-Sleep-Profils, wenn ein weiteres Funktionsprofil aktiviert war. Eine angemessene Zeit ist hierbei z.B. abhängig von dem vor dem Zeitpunkt der Aktivierung aktivierten Funktionsprofil und/oder vom Fahrzeugtyp durch den Fachmann zu bestimmen.

Durch das vorgeschlagene Verfahren ergibt sich vorteilhaft, dass eine Mehrzahl von Parametern von Licht- und Audioquellen gleichzeitig, also in einem Bedienschritt, eingestellt werden können. Die Einstellung kann hierbei insbesondere über ein haptisches Bedienelement, beispielsweise einen Taster, erfolgen. Ein Nutzer kann dann in vorteilhafter Weise über einen Tastendruck auf diesen Taster Parameter eine Mehrzahl von Parametern von Licht- und Audioquellen einstellen.

Insbesondere können auch Parameter weiterer Fahrzeugfunktionen weiterer Funktionsbereiche des Fahrzeugs gleichzeitig eingestellt werden. Die Konfiguration des Baby-Sleep-Profils, also die standardmäßige Einstellung aller Parameter, kann z.B. vom Hersteller, also werksseitig, erfolgen.

Hierbei ist auch vorstellbar, dass Funktionsprofile auch in Abhängigkeit einer bestimmten Fahrsituation aktiviert werden können. Beispielsweise kann bei einer detektierten Nachtfahrt das Baby-Sleep-Profils automatisch aktiviert werden. Hierdurch lässt sich in vorteilhafter Weise die Funktionsweise von Fahrzeugfunktionen auch an eine Fahrsituation anpassen.

Dabei wird das Baby-Sleep-Profil mittels eines Bedienelements aktiviert. Das Bedienelement, kann beispielsweise ein Touchscreen, ein Mikrofon mit angeschlossener Spracherkennung oder ein haptisches Bedienelement, z.B. ein Schalter, Drehknopf, Druckknopf, sein. Vorzugsweise ist das Bedienelement ein Softkey auf einer so genannten Head-Unit, die im Fahrzeug angeordnet ist. Hierdurch ergibt sich in vorteilhafter Weise, dass die Aktivierung einfach erfolgen und/oder das Bedienelement in ein bestehendes Bediensystem des Fahrzeug integriert werden kann.

Des Weiteren ist nach einer Aktivierung des Baby-Sleep-Profils mindestens ein Parameter mindestens einer Lichtquelle und/oder mindestens ein Parameter mindestens einer Audioquelle nutzerspezifisch einstellbar. Unter einer nutzerspezifischen Einstellung eines Parameters wird hierbei verstanden, dass gezielt ein oder mehrere Parameter von einem Nutzer, z.B. einem Fahrzeugführer, gezielt und individuell eingestellt werden. Es besteht also die Möglichkeit, bei einem aktivierten Baby-Sleep-Profil einzelne Parameter der Lichtquellen und/oder Audioquellen nutzerspezifisch zu verändern, während verbleibende Lichtquellen und/oder Audioquellen mit den von dem Baby-Sleep-Profil vorgegebenen Parametern gesteuert werden.

Zur nutzerspezifischen Einstellung von Parametern kann im Baby-Sleep-Profil ein zweiter Bedienweg für die Einstellung von Parametern von Lichtquellen und/oder Audioquellen vorgesehen sein. Dieser kann gegebenenfalls komplizierter als die reine Auswahl und Aktivierung des Baby-Sleep-Profils gestaltet sein.

Weiter kann im Baby-Sleep-Profil nach einer Aktivierung des Baby-Sleep-Profils eine nutzerspezifische Änderung von einem oder mehreren Parametern einer oder mehrerer ausgewählter Licht- und/oder Audioquellen nicht zulässig sein. Hierbei kann z.B. eine Veränderung von ausgewählten Parametern im Baby-Sleep-Profil gesperrt sein. Beispielsweise kann das Baby-Sleep-Profil eine Anzahl von nutzerspezifisch veränderbaren Parametern und eine Anzahl von nicht nutzerspezifisch veränderbaren Parametern.

Durch die Möglichkeit einer nutzerspezifischen Einstellung von Parametern auch bei aktivierten Baby-Sleep-Profil wird in vorteilhafter Weise ermöglicht, dass Licht- und/oder Audioquellen an einen Nutzer, insbesondere einen Fahrzeugführer, angepasst werden können. Dies kann z.B. die Fahrsicherheit erhöhen.

In einer weiteren Ausführungsform wird das Baby-Sleep-Profil aus mindestens zwei Funktionsprofilen ausgewählt. Eine Auswahl kann aus den vorhergehend genannten, insbesondere aus den gruppenspezifischen, Funktionsprofilen erfolgen. Eine Auswahl kann hierbei beispielsweise mittels einer Betätigung eines Auswahlelements erfolgen. Ein Auswahlelement kann beispielsweise ein Touchscreen, ein Mikrofon mit angeschlossener Spracherkennung oder ein haptisches Bedienelement, z.B. ein Schalter, Drehknopf, Druckknopf, sein. Selbstverständlich sind auch weitere Auswahlelemente vorstellbar. Hierdurch ergibt sich in vorteilhafter Weise, dass ein Fahrzeug für mehrere Fahrsituationen oder Nutzergruppen nutzbar wird, wobei durch eine Auswahl und eine Aktivierung von einem entsprechenden Funktionsprofil aufgrund einer besseren Anpassung der Parameter an eine Fahrsituation oder an den Nutzer z.B. eine Fahrsicherheit erhöht wird.

Das Bedienelement und das Auswahlelement können hierbei beispielsweise kombiniert ausgeführt sein. Bei einer Kombination ergibt sich in vorteilhafter Weise, dass eine Auswahl und eine Aktivierung z.B. durch den Fahrzeugführer intuitiv und in wenigen Bedienschritten erfolgen kann.

In einer weiteren Ausführungsform werden bei einer Aktivierung des Baby-Sleep-Profils alle Parameter aller parametrisierbaren Lichtquellen eingestellt, die dem Funktionsbereich Lichtquellen zugeordnet sind. Gleichzeitig werden alle Parameter aller parametrisierbaren Audioquellen eingestellt, die dem Funktionsbereich Audioquellen zugeordnet sind. Hierdurch ergibt sich in vorteilhafter Weise, dass alle veränderbaren Parameter gleichzeitig eingestellt werden können. In einer alternativen Ausführungsform werden nur vorbestimmte Parameter der Lichtquellen und der Audioquellen eingestellt. Hierdurch ergibt sich in vorteilhafter Weise, dass nicht alle, sondern nur ausgewählte, Parameter eingestellt werden, was weniger Rechenaufwand, Übertragungskapazität und Speicherbedarf erfordert.

In einer weiteren Ausführungsform ist das Baby-Sleep-Profil konfigurierbar. Hierbei kann das Baby-Sleep-Profil von einem Nutzer, insbesondere dem Fahrzeugführer, konfigurierbar sein. Weiter können alle oder nur ausgewählte Parameter in dem Baby-Sleep-Profil konfigurierbar sein. Hierdurch ergibt sich in vorteilhafter Weise, dass ein Nutzer das Baby-Sleep-Profil verändern kann.

Die Konfiguration des Baby-Sleep-Profils bedeutet hierbei nicht die Erstellung eines nutzerspezifischen Baby-Sleep-Profils. So kann z.B. ein Baby-Sleep-Profil von einem ursprünglichen Baby-Sleep-Profil in ein umkonfiguriertes Baby-Sleep-Profil umkonfiguriert werden. Wird nun ein weiteres Funktionsprofil und hiernach wieder das Baby-Sleep-Profil aktiviert, so wird nicht mehr das ursprünglichen Baby-Sleep-Profil sondern das umkonfigurierte Baby-Sleep-Profil aktiviert.

Wird im Gegensatz hierzu das Baby-Sleep-Profil von einem ursprünglichen Baby-Sleep-Profil mittels einer nutzerspezifischen Einstellung eines Parameters in ein geändertes Baby-Sleep-Profil geändert, hiernach ein weiteres Funktionsprofil und dann wieder das Baby-Sleep-Profil aktiviert, so wird wieder das ursprünglich und nicht das geänderte Baby-Sleep-Profil aktiviert.

Das Fahrzeug kann beispielsweise eine Anzeigeeinheit aufweisen, wobei in einer Konfigurationsansicht der Anzeigeeinheit ein Überblick über die im Baby-Sleep-Profil verwendeten Ausprägungen der Parameter der Licht- und/oder Audioquellen ermöglicht wird.

Eine Konfiguration des Baby-Sleep-Profils kann hierbei beispielsweise über ein oder mehrere Konfigurationselemente erfolgen, die im Fahrzeug angeordnet sind. Das Konfigurationselement kann eine haptische oder graphische Schnittstelle sein. Alternativ oder kumulativ kann eine Konfiguration des Baby-Sleep-Profils extern, z.B. mittels eines Computers, erfolgen.

Weiter kann in einer Reset-Funktion ein Ausgangszustand des Baby-Sleep-Profils eingestellt werden. Hierdurch ergibt sich in vorteilhafter Weise, dass das Baby-Sleep-Profil auf seine Ausgangswerte zurückgesetzt werden kann.

Hierbei kann eine Einstellung von mindestens einem Parameter der mindestens einen Lichtquelle und der mindestens eine Audioquelle eigensicher sein. Auch das von einem Nutzer konfigurierte Baby-Sleep-Profil und/oder die vom Nutzer nutzerspezifisch geänderten Parameter des Baby-Sleep-Profils können eigensicher sein. Unter dem Begriff eigensicher wird hierbei verstanden, dass die Einstellung von Parametern nur dann erfolgen darf, wenn sich das Fahrzeug in einem sicheren Betriebszustand befindet und/oder die Einstellung der Parameter keinen unsicheren Betriebszustand herbeiführt. Hierfür kann z.B. mindestens eine Überwachungseinheit im Fahrzeug angeordnet sein, wobei die Überwachungseinheit eine Überwachungsfunktion ausführt. Die Überwachungseinheit überwacht hierbei eine Einstellung von Parametern. Beispielsweise kann die Überwachungseinheit überprüfen, ob ein Parameter innerhalb eines vorbestimmten Intervalls des Parameters liegt. Liegt der Parameter außerhalb des vorbestimmten Intervalls, so ist der Parameter unzulässig. Z.B. darf eine Lichtstärke nicht zu hell oder dunkel und/oder eine Lautstärke nicht zu leise oder laut eingestellt werden.

Weiter kann die Überwachungseinheit eine Einstellung eines unzulässigen Parameters verhindern. Zusätzlich kann in diesem Fall die Überwachungseinheit einen zulässigen Parameter, z.B. einen vorbestimmten Standard-Parameter, einstellen.

Hierdurch ergibt sich in vorteilhafter Weise, dass eine Fahrsicherheit auch bei einer Änderung von Parametern der Fahrzeugfunktionen gewährleistet ist.

Weiter vorgeschlagen wird eine Vorrichtung zur Einstellung von mindestens einem Parameter mindestens einer Lichtquelle und mindestens einem Parameter einer Audioquelle, wobei die Lichtquelle und die Audioquelle in einem Fahrzeug angeordnet ist. Mittels der Vorrichtung sind die vorhergehend erläuterten Verfahren ausführbar. Die Vorrichtung kann hierfür beispielsweise ein Bedienelement, insbesondere ein Touchscreen, eine Head-Unit oder ein haptisches Bedienelement, umfassen. Weiter kann die Vorrichtung mindestens ein Auswahlelement umfassen. Weiter kann die Vorrichtung mindestens eine Einstelleinheit umfassen, wobei mittels der Einstelleinheit mindestens ein Parameter der mindestens einen Lichtquelle und/oder mindestens ein Parameter der mindestens einen Audioquelle nutzerspezifisch einstellbar ist. Weiter kann die Vorrichtung mindestens ein Korifigurationselement umfassen, wobei mittels des Konfigurationselement das Baby-Sleep-Profil konfigurierbar ist. Weiter kann die Vorrichtung auch die mindestens eine Lichtquelle und die mindestens eine Audioquelle umfassen.

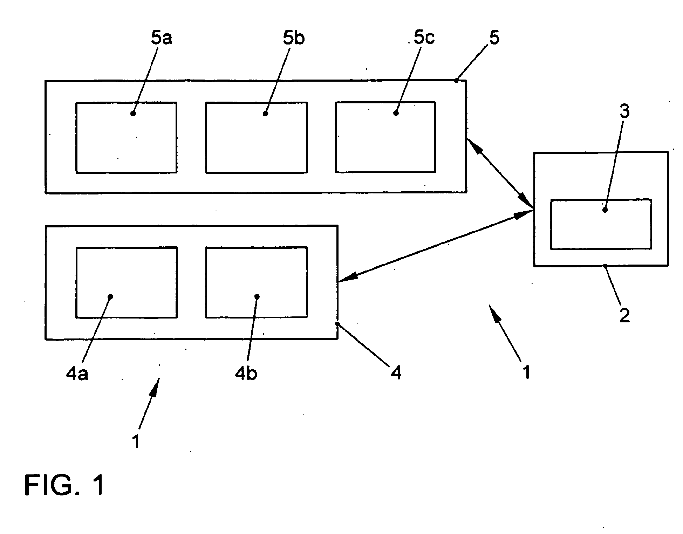

Die Erfindung wird anhand eines Ausführungsbeispiels näher erläutert. Die Figur zeigt ein schematisches Blockschaltbild einer Vorrichtung zur Einstellung von mindestens einem Parameter einer Lichtquelle und mindestens einem Parameter einer Audioquelle.

Hierbei umfasst eine Vorrichtung 1 eine Head-Unit 2, die als Anzeige- und Bedieneinheit dient. Die Head-Unit 2 weist ein Softkey 3 auf, wobei bei Betätigung des Softkeys 3 ein Baby-Sleep-Profil aktiviert wird. Weiter umfasst die Vorrichtung 1 ein nicht dargestelltes Steuergerät der Head-Unit 2 und ein ebenfalls nicht dargestellte Speichereinheit. Weiter dargestellt sind ein Steuergerät 4a einer Lichtquelle in einem Fahrzeughimmel und ein Steuergerät 4b für eine Lichtquelle einer Fußraumbeleuchtung. Diese sind einem Funktionsbereich Lichtquellen 4 zugeordnet. Weiter dargestellt sind ein Steuergerät 5a einer Audioquelle eines Fahrerassistenzsystems, ein Steuergerät 5b einer Audioquelle eines Fahrerinformationssystems und ein Steuergerät 5c einer Audioquelle eines Infotainmentsystems. Diese sind einem Funktionsbereich Audioquellen 5 zugeordnet.
Die Steuergeräte 4a, 4b, 5a, 5b, 5c sind hierbei mit dem Steuergerät der Head-Unit 2 und der Speichereinheit über ein ebenfalls nicht dargestelltes Bussystem verbunden. Ein nicht dargestellter Fahrzeugführer kann durch Aktivierung des Softkeys 3 das Baby-Sleep-Profil auswählen und aktivieren. Das Steuergerät der Head-Unit 2 detektiert die Auswahl und Aktivierung des Baby-Sleep-Profils und teilt dies datentechnisch der Speichereinheit und den Steuergeräten 4a, 4b, 5a, 5b, 5c mit. Dann überträgt die Speichereinheit die Parameter der Licht- und Audioquellen über das Bussystem an die Steuergeräte 4a, 4b, 5a, 5b, 5c. Diese übernehmen die übertragenen Parameter und führen nachfolgend die mit den übertragenen Parametern parametrisierten Beleuchtungs- und Audiofunktionen aus.

Beispielsweise kann beim Bedienen des Softkeys 3 eine Parametereinstellung gemäß mindestens einer der folgenden Funktionalitäten eingestellt werden:
- Dimmung einer Innenbeleuchtung beim Türöffnen,
- Reduktion einer Lautstärke von Warntönen oder Anweisungen eines Fahrerassistenzsystems, insbesondere im hinteren Bereich des Fahrzeugs,
- Aktivierung einer stiften Zielführung" im Navigationssystem,
- Deaktivierung der Lautstärkenerhöhung bei Verkehrsdurchsagen im Radio,
- Verdunkelung der Scheiben (z.B. durch Sonnenrollos), um flackerndes Außenlicht fernzuhalten.

### Bezugszeichenliste

- 1: Vorrichtung zur Einstellung von mindestens einem Parameter mindestens einer Lichtquelle.
- 2: Head-Unit
- 3: Softkey
- 4a: Steuergerät
- 4b: Steuergerät
- 4: Funktionsbereich Lichtquellen
- 5a: Steuergerät
- 5b: Steuergerät
- 5c: Steuergerät
- 5: Funktionsbereich Audioquellen

## Patentansprüche

1. Verfahren zur Einstellung von mindestens einem Parameter mindestens einer Lichtquelle, wobei die Lichtquelle in einem Fahrzeug angeordnet ist, wobei mittels einer Aktivierung eines ersten Profils der mindestens eine Parameter der mindestens einen Lichtquelle und mindestens ein Parameter mindestens einer Audioquelle eingestellt werden, wobei die mindestens eine Audioquelle in dem Fahrzeug angeordnet ist, wobei das erste Profil mittels eines Bedienelements aktiviert wird,
**dadurch gekennzeichnet, dass**
das erste Profil als Funktionsprofil ausgebildet ist, wobei bei Aktivierung des Funktionsprofils eine Parametereinstellung zur Durchführung mindestens einer der folgenden Funktionalitäten durchgeführt wird, nämlich
- Dimmung einer Innenbeleuchtung beim Türöffnen,
- Reduktion einer Lautstärke von Warntönen oder Anweisungen eines Fahrerassistenzsystems,
- Aktivierung einer "stillen Zielführung" im Navigationssystem,
- Deaktivierung der Lautstärkenerhöhung bei Verkehrsdurchsagen,
wobei nach einer Aktivierung des ersten Funktionsprofils alle oder ausgewählte Parameter der Lichtquellen und/oder der Audioquellen nutzerspezifisch einstellbar sind.

2. Verfahren nach Anspruch 1, **dadurch gekennzeichnet, dass** das erste Funktionsprofil aus mindestens zwei Funktionsprofilen ausgewählt wird.

3. Verfahren nach einem der vorangegangenen Ansprüche, **dadurch gekennzeichnet, dass** bei einer Aktivierung des ersten Funktionsprofils alle Parameter von Lichtquellen, die einem Funktionsbereich Lichtquellen des Fahrzeugs zugeordnet sind, und alle Parameter aller Audioquellen, die einem Funktionsbereich Audioquellen des Fahrzeugs zugeordnet sind, oder nur vorbestimmte Parameter der mindestens einen Lichtquelle und der mindestens einen Audioquelle eingestellt werden.

4. Verfahren nach einem der vorangegangenen Ansprüche, **dadurch gekennzeichnet, dass** mindestens das erste Funktionsprofil konfigurierbar ist.

5. Vorrichtung (1) zur Einstellung von mindestens einem Parameter mindestens einer Lichtquelle, wobei die Vorrichtung (1) mindestens ein Bedienelement umfasst, wobei mittels des Bedienelements mindestens ein erstes Profil aktivierbar ist, wobei mittels einer Aktivierung des ersten Profils mindestens ein Parameter mindestens einer Lichtquelle und mindestens ein Parameter mindestens einer Audioquelle einstellbar sind, wobei die Lichtquelle und die Audioquelle in einem Fahrzeug angeordnet sind, **dadurch gekennzeichnet, dass**
das erste Profil als Funktionsprofil ausgebildet ist, wobei bei Aktivierung des Funktionsprofils eine Parametereinstellung zur Durchführung mindestens einer der folgenden Funktionalitäten durchgeführt wird, nämlich
- Dimmung einer Innenbeleuchtung beim Türöffnen,
- Reduktion einer Lautstärke von Warntönen oder Anweisungen eines Fahrerassistenzsystems,
- Aktivierung einer "stillen Zielführung" im Navigationssystem,
- Deaktivierung der Lautstärkenerhöhung bei Verkehrsdurchsagen,
wobei die Vorrichtung (1) mindestens ein Einstellelement umfasst, wobei mittels des Einstellelements nach einer Aktivierung alle oder ausgewählte Parameter der Lichtquellen und/oder der Audioquellen nutzerspezifisch einstellbar sind.

6. Vorrichtung nach Anspruch 5, **dadurch gekennzeichnet, dass** die Vorrichtung (1) mindestens ein Auswahlelement umfasst, wobei mittels des Auswahlelements mindestens das erste Funktionsprofil aus mindestens zwei Funktionsprofilen auswählbar ist.

7. Vorrichtung nach einem der Ansprüche 5 oder 6, **dadurch gekennzeichnet, dass** die Vorrichtung (1) mindestens eine Konfigurationselement umfasst, wobei mittels der Konfigurationselements mindestens das erste Funktionsprofil konfigurierbar ist.

## Claims

1. Method for setting at least one parameter of at least one light source, wherein the light source is arranged in a vehicle, wherein, by means of an activation of a first profile, the at least one parameter of the at least one light source and at least one parameter of at least one audio source are set, wherein the at least one audio source is arranged in the vehicle, wherein the first profile is activated by means of an operating element, **characterized in that**
the first profile is configured as a function profile, wherein, upon activation of the function profile, a parameter setting is carried out in order to carry out at least one of the following functionalities, namely
- dimming an internal light upon opening of a door,
- reducing a volume of warning sounds or instructions of a driver assistance system,
- activating a "silent navigation" in the navigation system,
- deactivating the volume increase in the event of traffic announcements,
wherein, after an activation of the first function profile, all or selected parameters of the light sources and/or the audio sources are settable in a user-specific manner.

2. Method according to Claim 1, **characterized in that** the first function profile is selected from at least two function profiles.

3. Method according to one of the preceding claims, **characterized in that**, in the event of an activation of the first function profile, all parameters of light sources which are assigned to a functional area of light sources of the vehicle, and all parameters of all audio sources which are assigned to a functional area of audio sources of the vehicle, or only predetermined parameters of the at least one light source and the at least one audio source are set.

4. Method according to one of the preceding claims, **characterized in that** at least the first function profile is configurable.

5. Device (1) for setting at least one parameter of at least one light source, wherein the device (1) comprises at least one operating element, wherein, by means of the operating element, at least one first profile is activatable, wherein at least one parameter of at least one light source and at least one parameter of at least one audio source are settable by means of an activation of the first profile, wherein the light source and the audio source are arranged in a vehicle,
**characterized in that**
the first profile is configured as a function profile, wherein, upon activation of the function profile, a parameter setting is carried out in order to carry out at least one of the following functionalities, namely
- dimming an internal light upon opening of a door,
- reducing a volume of warning sounds or instructions of a driver assistance system,
- activating a "silent navigation" in the navigation system,
- deactivating the volume increase in the event of traffic announcements,
wherein that the device (1) comprises at least one setting element, wherein all or selected parameters of the light sources and/or the audio sources are settable in a user-specific manner by means of the setting element after an activation.

6. Device according to Claim 5, **characterized in that** the device (1) comprises at least one selection element, wherein at least the first function profile is selectable from at least two function profiles by means of the selection element.

7. Device according to either of Claims 5 and 6, **characterized in that** the device (1) comprises at least one configuration element, wherein at least the first function profile is configurable by means of the configuration element.

## Revendications

1. Procédé de réglage d'au moins un paramètre d'au moins une source de lumière, la source de lumière étant disposée dans un véhicule, l'au moins un paramètre de l'au moins une source de lumière et au moins un paramètre d'au moins une source audio étant réglés au moyen d'une activation d'un premier profil, l'au moins une source audio étant disposée dans le véhicule, le premier profil étant activé au moyen d'un élément de commande,
**caractérisé en ce que**
le premier profil est réalisé sous la forme d'un profil fonctionnel, un réglage de paramètre étant effectué lors de l'activation du profil fonctionnel en vue d'accomplir au moins l'une des fonctionnalités suivantes, à savoir
- gradation d'un éclairage intérieur lors de l'ouverture d'une portière,
- réduction d'un volume sonore des tonalités d'avertissement ou des instructions d'un système d'assistance au conducteur,
- activation d'un « guidage silencieux vers la destination » dans le système de navigation,
- désactivation de l'augmentation du volume sonore lors des annonces de trafic,
la totalité ou une sélection des paramètres des sources de lumière et/ou des sources audio pouvant être réglés spécifiquement en fonction de l'utilisateur après une activation du premier profil fonctionnel.

2. Procédé selon la revendication 1, **caractérisé en ce que** le premier profil fonctionnel est sélectionné parmi au moins deux profils fonctionnels.

3. Procédé selon l'une des revendications précédentes, **caractérisé en ce que** lors de l'activation du premier profil fonctionnel, tous les paramètres des sources de lumière qui sont associées à une zone fonctionnelle sources de lumière du véhicule et tous les paramètres des sources audio qui sont associées à une zone fonctionnelle sources audio du véhicule, ou seulement des paramètres prédéfinis de l'au moins une source de lumière et de l'au moins une source audio, sont réglés.

4. Procédé selon l'une des revendications précédentes, **caractérisé en ce que** l'au moins un profil fonctionnel est configurable.

5. Dispositif (1) de réglage d'au moins un paramètre d'au moins une source de lumière, le dispositif (1) comprenant au moins un élément de commande, au moins un premier profil pouvant être activé au moyen de l'élément de commande, au moins un paramètre d'au moins une source de lumière et au moins un paramètre d'au moins une source audio étant réglables au moyen d'une activation du premier profil, la source de lumière et la source audio étant disposées dans un véhicule,
**caractérisé en ce que**
le premier profil est réalisé sous la forme d'un profil fonctionnel, un réglage de paramètre étant effectué lors de l'activation du profil fonctionnel en vue d'accomplir au moins l'une des fonctionnalités suivantes, à savoir
- gradation d'un éclairage intérieur lors de l'ouverture d'une portière,
- réduction d'un volume sonore des tonalités d'avertissement ou des instructions d'un système d'assistance au conducteur,
- activation d'un « guidage silencieux vers la destination » dans le système de navigation,
- désactivation de l'augmentation du volume sonore lors des annonces de trafic,
le dispositif (1) comprenant au moins un élément de réglage, la totalité ou une sélection des paramètres des sources de lumière et/ou des sources audio pouvant être réglés spécifiquement en fonction de l'utilisateur au moyen de l'élément de réglage après une activation.

6. Dispositif selon la revendication 5, **caractérisé en ce que** le dispositif (1) comprend au moins un élément de sélection, au moins le premier profil fonctionnel parmi au moins deux profils fonctionnels pouvant être sélectionné au moyen de l'élément de sélection.

7. Dispositif selon l'une des revendications 5 ou 6, **caractérisé en ce que** le dispositif (1) comprend au moins un élément de configuration, au moins le premier profil fonctionnel pouvant être configuré au moyen de l'élément de configuration.
